# EUROPEAN PATENT SPECIFICATION

(11) **EP 3 105 914 B1**
(45) Date of publication and mention of the grant of the patent: **22.11.2017**
(21) Application number: 15703176.6
(22) Date of filing: 21.01.2015
(51) Int. Cl.: H04M 1/60

(54) **ESTABLISHING A CONNECTION BETWEEN A MOBILE DEVICE AND A HANDS-FREE SYSTEM OF A VEHICLE BASED ON THEIR PHYSICAL DISTANCE**
VERBINDUNGSAUFBAU ZWISCHEN EINER MOBILEN VORRICHTUNG UND EINEM FREISPRECHSYSTEM EINES FAHRZEUGS AUF GRUNDLAGE IHRE DISTANZ
ÉTABLISSEMENT D'UNE CONNEXION ENTRE UN DISPOSITIF MOBILE ET UN SYSTÈME MAINS LIBRES D'UN VÉHICULE SUR LA BASE DE LEUR DISTANCE

(30) Priority: 12.02.2014 US 201414178888
(43) Date of publication of application: 21.12.2016
(73) Proprietor: Qualcomm Incorporated, San Diego, CA 92121-1714 (US)
(72) Inventor: YAKIR, Yehuda Udi, San Diego, California 92121 (US); AGASSY, Meir, San Diego, California 92121 (US); ABUDI, Yizhaq, San Diego, California 92121 (US)
(74) Representative: Tomkins & Co
(86) International application number: PCT/US2015/012306
(87) International publication number: WO 2015/123001

(56) References cited:
- EP-A2- 2 424 198
- WO-A1-2012/131570
- WO-A1-2013/101174
- US-A1- 2010 210 212
- US-A1- 2011 212 748

## Description

### FIELD

The subject matter disclosed herein relates generally to establishing a personal area network (PAN) connection between a PAN communication system and a mobile device.

### BACKGROUND

Mobile communication devices are pervasive in today's society. Often, those mobile communication devices employ Bluetooth network technology. Bluetooth network technology allows low power networks to be established between the mobile communication devices and other Bluetooth enabled devices. For example, a cellular telephone can be paired with a Bluetooth headset to enable call handling through the headset. That is, audio data of a user speaking during a telephone call is captured at the headset, and routed over the Bluetooth network to the cellular telephone for transfer over a cellular communication network. Similarly, telephone call data received at the cellular telephone can be routed by the phone to the Bluetooth headset for playback to the user in a speaker of the headset.

Another use of Bluetooth network technology includes deploying Bluetooth devices in automobiles. To support hands free calling during vehicle operations, automobile audio systems may be equipped with Bluetooth technology. Cellular telephones may be paired and configured to connect to a Bluetooth device in an automobile. When a cellular telephone and the automobile Bluetooth device are paired, a user of a cellular telephone may hear telephone call data through an audio system of a car, and provide outgoing voice data through a microphone of the car audio system. However, the range of a Bluetooth network often extends beyond the interior compartment of an automobile. Thus, when a cellular telephone and a car Bluetooth system are paired, such that a link between the devices is automatically established when the cellular telephone is within range of the automobile Bluetooth device, problems occur. For example, a cellular telephone user may be outside of an automobile when a call is received. Because a link has been established with the Bluetooth device, the user's call data is routed through the automobile's internal audio system. But since the user is outside of the automobile, the user cannot effectively participate in the telephone call. US2010/210212 discloses a mobile communication device includes: a first communication module configured to perform first wireless communication with a base station; a second communication module configured to perform second wireless communication with a hands-free device through a near field communication network; a power controller configured to supply power to the second communication module when an incoming signal is received from the base station; and a link controller configured to control the second communication module to establish a wireless link with the hands-free device after the power is supplied to the second communication module by the power controller, wherein the power controller maintains supplying the power to the second communication module when the wireless link is established by the link controller and stops supplying the power to the second communication module when the wireless link is unestablished by the link controller.

### SUMMARY OF THE INVENTION

The object of the invention is achieved by the independent claims.

### BRIEF DESCRIPTION OF THE DRAWINGS

**Figure 1** is a block diagram of an exemplary system architecture for enabling a connection to be established between a personal area network communication system and a mobile device;
**Figure 2** is block diagram of one embodiment of a mobile device and a personal area network communication system;
**Figure 3** is a flow diagram of one embodiment of a method for establishing a connection between a personal area network communication system and a mobile device; and
**Figure 4** is a flow diagram of one embodiment of a method for establishing a master device for a connection between a personal area network communication system and a plurality of mobile devices.

### DETAILED DESCRIPTION

The word "exemplary" or "example" is used herein to mean "serving as an example, instance, or illustration." Any aspect or embodiment described herein as "exemplary" or as an "example" in not necessarily to be construed as preferred or advantageous over other aspects or embodiments. Described herein with reference to the appended claims is a method for establishing a personal area network connection between a mobile device and a personal area network system as claimed in claim 1, a non-transitory computer readable storage medium as claimed in claim 11 and a mobile device as claimed in claim 12.

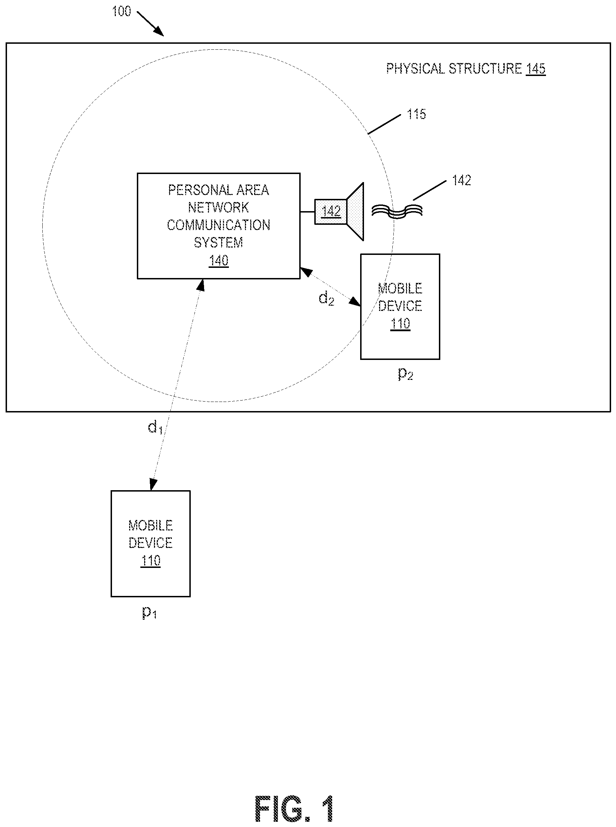

**Figure 1** is a block diagram of an exemplary system architecture for enabling a connection to be established between a personal area network communication system and a mobile device.

In one embodiment, the system 100 includes a mobile device 110. In one embodiment, mobile device 110 is be a mobile computing device, such as a mobile telephone, personal digital assistant, tablet computer, etc. capable of sending and receiving wireless communications over a cellular communication network (not shown). In one embodiment, system 100 also includes a personal area network (PAN) communication system 140 within a physical structure 145. The physical structure 145 can be a car, a house, a room within a house, an office, etc. For example, the physical structure 145 can be a car, and the PAN communication system 140 is within the car and coupled with the car's audio system 142.

The PAN communication system 140 and mobile device 110 establish a personal area network for the exchange of data, such as setup data, configuration data, telephone call data, etc. In one embodiment, the mobile device 110 and the PAN communication system 140 are paired prior to establishing the personal area network. In one embodiment, the pairing of the mobile device 110 and the PAN communication system 140 can include the exchange of messages or data, such as device and PAN name, device and PAN identifiers, passwords, communications protocols, etc. that enable mobile 110 device to communicate over the personal area network with PAN communication system 140. Furthermore, although only a single mobile device 110 is illustrated, multiple mobile devices may be paired with PAN communication system 140. For example, mobile device 110 and PAN communication system 140 may establish a connection that enables mobile device 110 to route telephone call data through an audio system 142 to which the PAN communication system 140 is coupled. In one embodiment, audio system 142 and PAN communication system 140 are integrated into the same system. After the connection is established, a user of the mobile device 110 is enabled to hear incoming telephone call data received by mobile device 110 over a cellular communication network, as well as to provide outgoing telephone call data, through the audio system 142 for routing by the mobile device 110 over the cellular communication network .

In one embodiment, the personal area network established between PAN communication system 140 and mobile device 110 is a Bluetooth communication network, and the connection between PAN communication system 140 and mobile device 110 is established utilizing Bluetooth communication protocols. Although the techniques discussed herein refer to Bluetooth communications, networks, and protocols, the techniques presented herein are not restricted to any particular type of personal area network.

In the embodiment illustrated in **Figure 1**, PAN communication system 140 is within physical structure 145. Thus, prior to routing data, such as routing telephone call data through PAN communication system 140 and audio system 142, mobile device 110 determines whether it is appropriate to route call data, or other data, to PAN communication system 140. That is, mobile device 110 and PAN communication system 140 may be within range of one another, and able to establish a connection for the exchange of data, such as when mobile device 110 is at position p₁. However, at position p₁, mobile device 110 is outside of physical structure 145. If telephone call data were routed to PAN communication system 140 at position p₁, such that received call data (e.g., conversation received during a telephone call) is played through audio system 142 and/or sent call data (e.g., conversation sent during a telephone call) is captured at a microphone of audio system 142, the telephone call data may not be received by audio system 142 or played through audio system 142 in a way that would enable a user to participate in the call. For example, at position p₁, a user of mobile device 110 whose telephone call was being routed through PAN communication system 140 would not be heard by the other side of a call because they would be segregated from, or out of range, of a microphone of audio system 142 within physical structure 145. Furthermore, incoming call data played through audio system 142, would also likely fail to be perceptible to a user that is outside of physical structure 145. The embodiments discussed herein are directed to ensuring that mobile device 110 is at a position, such as position p₂, which would enable a user of mobile device 110 to participate in an incoming telephone call via audio system 142 within physical structure 145.

In one embodiment, after mobile device 110 is paired with PAN communication system 140, mobile device 110 receives an incoming cellular communication, such as a telephone call. Mobile device 110 notifies the PAN communication system 140 of the telephone call event. When mobile device 110 and PAN communication system 140 are within a range suitable to establish a personal area network connection, PAN communication system 140 plays a ringtone, or other indication, of the incoming call event through audio system 140. In one embodiment, PAN communication system 140 further causes audio system 142 to generate an acoustic signal. In one embodiment, the acoustic signal may be an ultrasonic signal in the range of 25KHz-96KHz played through audio system 142, although signals in other frequency ranges could be utilized. For example, in one embodiment, the audio system 142 may be an automobile's audio system, and the ultrasonic signal is played through speakers of the automobile's audio system. As another example, the audio system 142 may be a Bluetooth device's internal speaker.

In one embodiment, one or more microphones (not shown) of the mobile device 110 capture audio data in an attempt to receive the acoustic signal. In one embodiment, three microphones of the mobile device attempt to receive the acoustic signal. In one embodiment, audio data is captured by mobile device 110 over a personal area network connection established between the mobile device 110 and PAN communication system 140. That is, mobile device 110 captures audio data when it knows that it is within range of PAN communication system 140, and capable of routing telephone call data to the PAN communication system 140. However, if mobile device 110 cannot establish a connection with PAN communication system 140, mobile device does not listen for the acoustic signal.

In one embodiment, mobile device 110 then attempts to determine a distance between the mobile device 110 and PAN communication system 140. In one embodiment, mobile device 110 determines the distance based on captured acoustic signal data. That is, mobile device 100 utilizes the captured audio data to detect the presence of the acoustic signal, and calculates the distance between the mobile device 110 and the PAN communication system 140 based on one or more factors related to the captured acoustic signal audio data. For example, mobile device 110 can calculate the distance from a received acoustic signal's level, by triangulating the PAN communication system's 140 distance from the mobile device using a differential time-of-flight of the acoustic signal between three or more microphones of the mobile device, as well as other factors associated with the received acoustic signal.

Mobile device 110 then compares the calculated distance with a threshold distance. In one embodiment, the threshold defines when a telephone call is to be processed by the mobile device 110 or by the PAN communication system 140. For example, the threshold distance may be a pre-defined distance threshold, such as 1 meter, 2 meters, 3 meters, etc. When the determined distance exceeds the distance threshold, or when an acoustic signal is not received by the mobile device 110, mobile device 110 determines that the received telephone call is to be handled by the mobile device 110. For example, as illustrated in Figure 1, when a calculated distance d₁ between the mobile device 110 at position p₁ and PAN communication system 140 fails to be within the distance threshold 115, incoming and outgoing telephone call data is processed and handled by the mobile device 110, and is not routed to the PAN communication system 140. However, when the calculated distance, such as calculated distance d₂ of mobile device 110 and position p₂, is within threshold 115, mobile device 110 routes telephone call data over a personal area network to PAN communication system 140 (e.g., outgoing telephone call audio data is captured by audio system 142, and incoming telephone call data is played over speakers of the audio system 142).

In one embodiment, during the duration of a telephone call, PAN communication system 140 periodically or continuously generates the acoustic signal utilized by mobile device 110 for distance determination. Mobile device 110, in turn, periodically or continuously listens for the acoustic signal and determines whether the distance between the mobile device 110 and the PAN communication system 140 exceeds the distance threshold. When there is a change, such as when mobile device 110 moves from outside the threshold distance to within the threshold distance, mobile device 110 may seamlessly hand off the telephone call to the PAN communication system 140 during the telephone call. Similarly when there is a change in distance that causes mobile device 110 to exceed the threshold distance, such as a user exiting a car in the middle of a conversation, mobile device 110 discontinues forwarding the telephone call data to the PAN communication system 140, and transitions to processing the telephone call locally at the mobile device 110.

In one embodiment, a plurality of mobile devices (not shown) may be paired with the PAN communication system 140, and communicate with the PAN communication system 140 simultaneously. The PAN communication system 140, as discussed above, transmits the acoustic signal in response to a telephone call being received by any of the paired mobile devices. Each of the mobile devices determines their distances to the PAN communication system 140, and communicates this distance in a connection request to the PAN communication system 140. In one embodiment, PAN communication system 140 utilizes the received distances to establish a closest mobile device, such as mobile device 110, as a master device. However, in another embodiment, the mobile devices may exchange their distances and decide between themselves which mobile device, such as mobile device 110, should be established as the master device. In one embodiment, once PAN communication system 140 establishes a mobile device as a master device, only the master device may route telephone call data through PAN communication system 140.

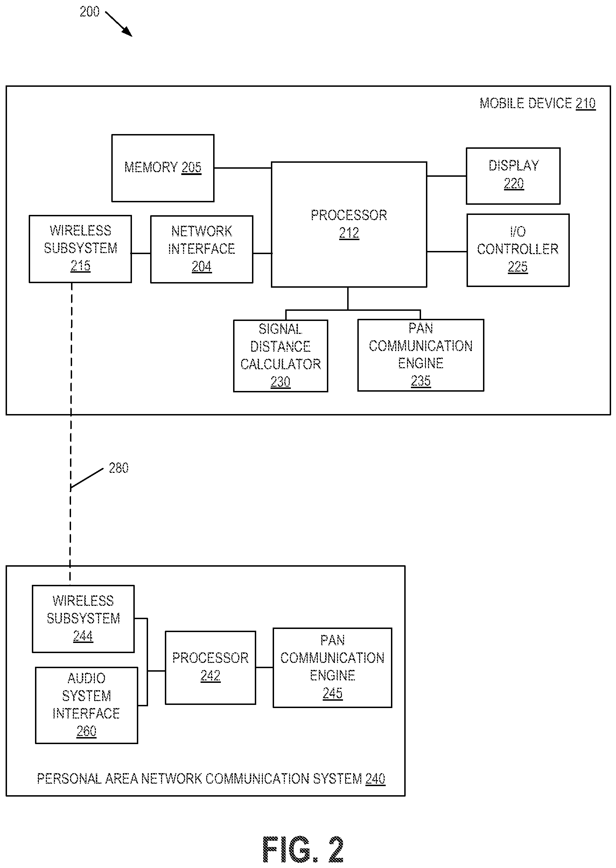

**Figure 2** is block diagram of one embodiment of a mobile device and a personal area network communication system. Mobile device 210 and personal area network communication system 240 provide additional details for mobile device 110 and personal area network communication system 140 discussed above in **Figure 1**.

In one embodiment, mobile device 210 is a system, which may include one or more processors 212, a memory 205, I/O controller 225, network interface 204, and display 220. Mobile device 210 may also include a number of processing modules, which may be implemented as hardware, software, firmware, or a combination, such as signal distance calculator 230 and personal area network (PAN) communication engine 235. It should be appreciated that mobile device 210 may also include, although not illustrated, a user interface (e.g., three or more microphones, keyboard, touch-screen, or similar devices), a power device (e.g., a battery), as well as other components typically associated with electronic devices. Although only a single wireless subsystem 215 is illustrated, it is understood that network interface 204 may also be coupled to a number of wireless subsystems 215 (e.g., Bluetooth, WiFi, Cellular, or other networks) to transmit and receive data streams through a wireless link to/from a network. Network interface 204 may also be a wired interface for direct connection to networks (e.g., the Internet, Ethernet, or other wireless systems). In one embodiment, wireless subsystem 215 couples mobile device 210 to personal area network communication system 240 over a wireless personal area network communication link 280.

Memory 205 may be coupled to processor 212 to store instructions for execution by processor 212. In some embodiments, memory 205 is non-transitory. Memory 205 may also store one or more PAN call handling modules (i.e., signal distance calculator 230 and/or PAN communication engine 235) to implement embodiments described below. It should be appreciated that embodiments of the invention as will be hereinafter described may be implemented through the execution of instructions, for example as stored in the memory 205 or other element, by processor 212 of mobile device 210 and/or other circuitry of mobile device 210 and/or other devices. Particularly, circuitry of mobile device 210, including but not limited to processor 212, may operate under the control of a program, routine, or the execution of instructions to execute methods or processes in accordance with embodiments of the invention. For example, such a program may be implemented in firmware or software (e.g. stored in memory 205 and/or other locations) and may be implemented by processors, such as processor 212, and/or other circuitry of mobile device 210. Further, it should be appreciated that the terms processor, microprocessor, circuitry, controller, etc., may refer to any type of logic or circuitry capable of executing logic, commands, instructions, software, firmware, functionality and the like.

Further, it should be appreciated that some or all of the functions, engines or modules described herein may be performed by mobile device 210 itself and/or some or all of the functions, engines or modules described herein may be performed by another system connected through I/O controller 225 or network interface 204 (wirelessly or wired) to mobile device 210. Thus, some and/or all of the functions may be performed by another system and the results or intermediate calculations may be transferred back to mobile device 210. In some embodiments, such other device may comprise a server (not shown). In some embodiments, the other device is configured to predetermine the results, for example, based on a known configuration of the mobile device 210.

In one embodiment, PAN communication system 240 is a system, which may also include one or more processors 242 and audio system interface 260. PAN communication system 240 may also include a number or processing modules, which may be implemented as hardware, software, firmware, or a combination, such as PAN communication engine 245. In one embodiment, wireless subsystem 244 couples PAN communication system 240 to mobile device 210 over personal area network communication link 280.

In one embodiment, the mobile device 210 and a PAN communication system 240 communicate with each other over a personal area network, such as a Bluetooth network, as discussed above in **Figure 1**. Furthermore, PAN communication system 240, in embodiments discussed herein, is within the confines of a physical structure, such as the cabin of an automobile, a room within a building, etc., or other structure where sound may be seriously attenuated by the structure such that little sound generated inside the structure will reach a microphone outside of the structure when compared to a microphone inside the structure.

In one embodiment, the interaction of mobile device 210 and PAN communication system 240 via the personal area network link 280 enables telephone call data, as well as other data, to be routed between mobile device 210 and PAN communication system 240. Mobile device 210 and PAN communication system 240 are paired with one another such that PAN communication link 280 is automatically established when mobile device 210 is within range of PAN communication system 240.

When mobile device 210 receives a telephone call event, such as an incoming telephone call received at mobile device 210 or a command received at mobile device 210 to initiate an outgoing telephone call, mobile device 210 determines whether to route the received telephone call event, and corresponding data, to PAN communication system 240 over the PAN network. In one embodiment, in response to a telephone call even, PAN communication engine 235 generates a notification that is sent to PAN communication system 240 via wireless subsystem 215. PAN communication system 240 receives the telephone call event notification, and PAN communication engine 245 causes audio system interface 260 to generate a command for an automobile audio system to play an acoustic signal. As discussed above, in some embodiments, the acoustic signal may be an ultra sound signal above the range of human hearing, preferably in in the range above 20 kHz.

One or more microphones of mobile device 210 listen for the acoustic signal, if any, by capturing audio data with the microphone(s). PAN communication engine 235 provides captured audio data, which may or may not contain the acoustic signal, to signal distance calculator 230. In one embodiment, signal distance calculator 230 analyzes the audio data for the presences of the acoustic signal, and to determine a physical distance between the mobile device 210 and the source of the acoustic signal (i.e., an automobile's speaker or other sound producing device). Signal distance calculator 230 calculates the distance from a received acoustic signal's level, by triangulating the audio source's distance from the mobile device 210 using a differential time-of-flight of the acoustic signal between three or more microphones of the mobile device. In another embodiment, signal distance calculator 230 calculates the distance from the received signal's energy level.

Signal distance calculator 230 then compares the results of the distance calculation to a threshold in order to determine whether to transfer telephone call data to PAN communication system 240. In one embodiment, the threshold is a pre-set distance, such as 1 yard, 1 meter, 2 meters, etc., that is set to ensure that mobile device 210 is within the physical structure in which PAN communication system 240 is located. For example, the threshold can be set to 1 meter when the PAN communication system 240 is located within an automobile. As another example, the threshold can be set to 3 meters when the PAN communication system 240 is located within a house, building, office, etc. The threshold distance is provided for illustrative purposes, as any threshold distance may be utilized consistent with the discussion herein.

In one embodiment, when signal distance calculator 230, based on a computed distance's comparison to the threshold, determines that mobile device 210 is outside of the threshold distance, signal distance calculator 230 informs PAN communication engine 235 that the telephone call should be handled by the mobile phone. PAN communication engine 235 accordingly does not transfer telephone call data to PAN communication system 240. However, when signal distance calculator 230 determines that mobile device 210 is within the threshold distance PAN communication engine 235 routes telephone call data to PAN communication system 240 via PAN link 280. PAN communication engine 245 may then handle incoming call data (e.g., incoming audio call data received by mobile device 210 over a cellular communication network) and outgoing call data (e.g., user voice data to be transferred to mobile device 210 for sending over the cellular telephone network) utilizing the audio system interface 260.

In one embodiment, during the duration of a telephone call of mobile device 210, PAN communication engine continuously or periodically causes audio system interface to generate acoustic signals. Accordingly, PAN communication engine 235 continuously or periodically transfers captured audio data to signal distance calculator 230. Signal distance calculator 230 then determines a current distance of the mobile device 210 from the acoustic signal source, to determine whether the user has entered or left the threshold distance (in some embodiments suggestive of an interior of the structure). When signal distance calculator 230 detects a change relative to the threshold distance, mobile device 210 may seamlessly transition an ongoing telephone call to the new mode of operation. For example, a distance calculation during a telephone call may indicate that mobile device 210 is no longer within an automobile's interior, and mobile device 210 ceases transferring telephone call data to PAN communication system 240. Similarly, if during an ongoing telephone call, a user moves within the interior of an automobile, as determined by one or more distance calculations, mobile device 210 may begin transferring telephone call data to PAN communication system 240. As a result, the determination of whether or not to transfer telephone call data is monitored by PAN communication engine 235 and signal distance calculator 230 to ensure the routing of telephone call data reflects a current location of a user.

In one embodiment, PAN communication engine 245 further selects which mobile device, from among a plurality of mobile devices, should be able to transfer call data to PAN communication system 240. As discussed above, several mobile devices 240 may be paired with PAN communication system 240. In one embodiment, PAN communication engine 245 periodically causes acoustic signals to be generated, and the mobile devices perform distance calculations, as discussed herein with respect to mobile device 210. The acoustic signal generation may also be triggered by a telephone call event received at one of the mobile devices. The mobile devices then transmit their distance calculations to PAN communication system 240. In one embodiment, PAN communication engine 245 selects the closest mobile device as a master communication device, which enables PAN communication system to handle the selected device's telephone call data. Furthermore, as discussed herein, the periodic generation of acoustic signals, and the movement of mobile devices, enables PAN communication engine 245 to periodically change the selection of a master mobile device based on current positions of the mobile devices with respect to the audio source coupled with PAN communication system 240.

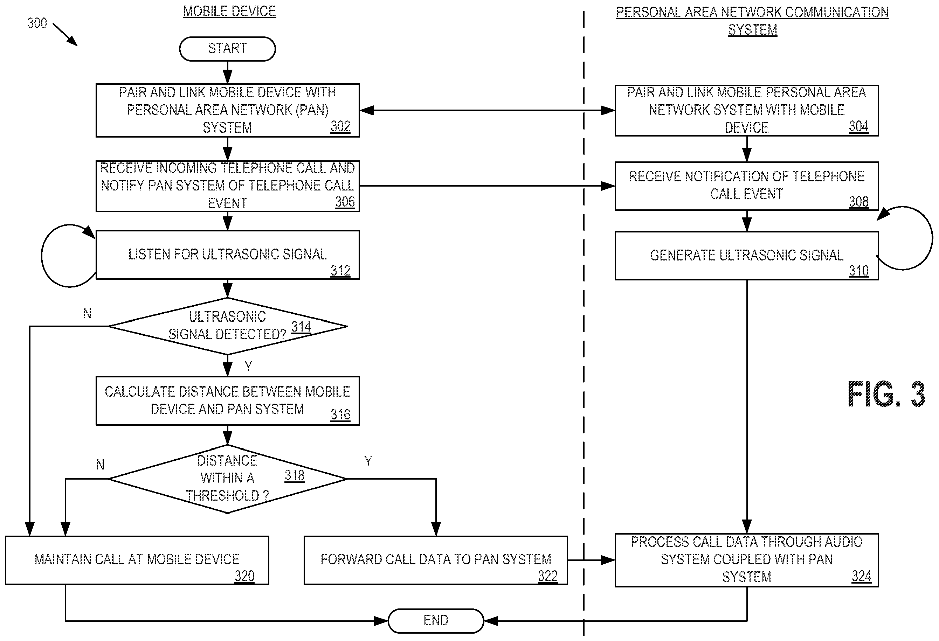

**Figure 3** is a flow diagram of one embodiment of a method 300 for establishing a connection between a personal area network communication system and a mobile device. The method 300 is performed by processing logic that may comprise hardware (circuitry, dedicated logic, etc.), software (such as is run on a general purpose computer system or a dedicated machine), firmware, or a combination. In one embodiment, the method 300 is performed by a mobile device (e.g., mobile device 110 or 210) and a personal area communication system (e.g., PAN system 140 or 240).

Referring to **Figure 3**, processing logic at the mobile device begins by pairing and linking a mobile device with a PAN system (processing block 302). Processing logic at the PAN system further pairs and links the PAN system with the mobile device (processing block 304). In one embodiment, the pairing includes the mobile device and the PAN system exchanging data (e.g., identifiers, encryption keys, PIN codes, etc.) consistent with a PAN communication protocol, such as a Bluetooth communication protocol. The protocol enables mobile device and the PAN system to establish a communication link and subsequently communicate with one another over the link in a personal area network. In one embodiment, the linking of mobile device and the PAN device over a personal area network occurs automatically whenever mobile device is within a personal area network range of PAN device. As discussed below, the linking enables call data, as well as other data, to be routed to PAN device. However, as discussed herein, mobile device first determines when the forwarding of call data would be appropriate, before call data is actually routed to PAN system.

Processing logic at the mobile device receives an incoming telephone call event and notifies the PAN system of the telephone call event (processing block 306). Alternatively, as discussed above, the pairing and linking of the mobile device and the PAN system may happen during an ongoing telephone call, in which case the mobile device could notify the PAN system of the telephone call event. Processing logic at the PAN system receives the notification of the telephone call event (processing block 308) and generates an acoustic signal (processing block 310). The acoustic signal may be an ultrasonic signal generated by an audio system to which the PAN system is coupled. For example, PAN system may cause speakers in an automobile's audio system to generate and play the acoustic signal. Furthermore, as discussed herein, the acoustic signal may be generated on a periodic or continuous basis.

Processing logic at the mobile device listens for the acoustic signal (processing block 312). Processing logic listens for the acoustic signal in response to telephone call events, and periodically or continuously during an ongoing telephone call processed by mobile device. In one embodiment, processing logic activates three or more microphones of the mobile device and captures audio data with the activated microphone(s). When an acoustic signal is not detected (decision block 314) by processing logic at mobile device, processing logic maintains the telephone call at mobile device (processing block 320). However, when the acoustic signal is detected (decision block 314), processing logic calculates a distance between the mobile device and the PAN system (for example, the approximate distance to the source of the acoustic signal) (processing block 316). In one embodiment, the distance is determined by processing logic based on a differential time of flight of the acoustic signal between three or more microphones of the mobile device, a level of the received acoustic signal, as well as other methods

Processing logic then compares the calculated distance with a threshold distance value (decision block 318). In one embodiment, the threshold is a reference distance sufficient to ensure that the mobile device is within a physical structure, in which the PAN system is located. When the calculated distance exceeds the threshold (decision block 318), processing logic maintains the call at the mobile device (processing block 320). However, when the calculated distance is within the threshold distance (decision block 318), and the mobile device is estimated to be within a physical structure in which the PAN system is located, processing logic forwards call data to the pan system (processing block 322).

Processing logic at the PAN system then processes the received call data through an audio system to which the PAN system is coupled (processing block 324). For example, incoming telephone call data received by the mobile device can be routed through a speaker system coupled with the PAN device (e.g., speakers in an automobile). Similarly, audio data spoken by a user during a telephone call may be capture by a microphone of the audio system coupled with the PAN device and routed to the mobile device.

The process then ends when the telephone call terminates at the mobile device.

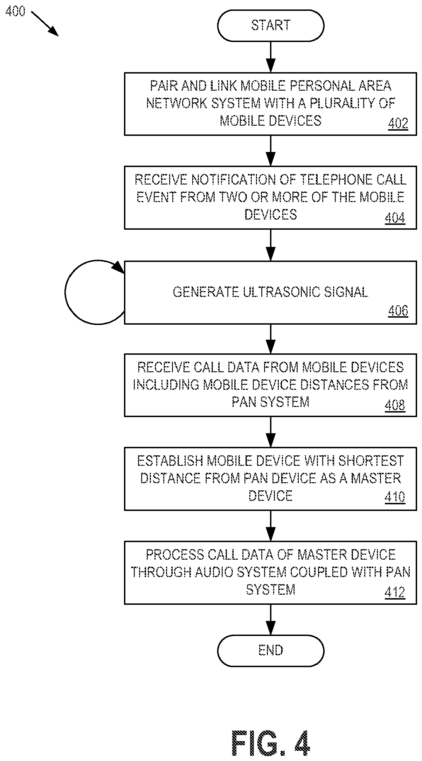

**Figure 4** is a flow diagram of one embodiment of a method 400 for establishing a master device for a connection between a personal area network communication system and a plurality of mobile devices. The method 400 is performed by processing logic that may comprise hardware (circuitry, dedicated logic, etc.), software (such as is run on a general purpose computer system or a dedicated machine), firmware, or a combination. In one embodiment, the method 400 is performed by a personal area communication system (e.g., PAN system 140 or 240).

Referring to **Figure 4**, processing logic begins by pairing and linking a PAN system with a plurality of mobile devices (processing block 402). In PAN networking and communication protocols, such as Bluetooth, a PAN system is capable of pairing with several devices simultaneously. However, in some embodiments, the PAN system limits one device to telephone call handling, data transfer, and other operations that involve the exchange of data over the PAN network.

Processing logic receives notification of a telephone call event from two or more of the mobile devices (processing block 404). For example, a mobile device may receive a telephone call, while a telephone call is currently occurring on a second mobile device. Both mobile devices may be in range of the network established with the PAN system, and PAN system must decide which mobile device should be able to transfer data to and from the PAN system.

Processing logic generates an acoustic signal (processing block 406), as discussed herein, and receives a plurality of requests to transfer call data from mobile devices, where the request includes distance calculations (processing block 408). From the received distance calculations, processing logic selects the mobile device with the shortest distance from the PAN system as a master device (processing block 410).

Processing logic then accepts the request to exchange call data with selected mobile device (processing block 412). In one embodiment, although a plurality of devices are in range of the PAN system, only a master device is enabled to exchange data, such as call data, with the PAN system. The PAN system then processes the call data through an audio system to which it is coupled, as discussed herein.

It should be appreciated that when the devices discussed herein is a mobile or wireless device, that it may communicate via one or more wireless communication links through a wireless network that are based on or otherwise support any suitable wireless communication technology. For example, in some aspects computing device or server may associate with a network including a wireless network. In some aspects the network may comprise a body area network or a personal area network (e.g., an ultra-wideband network). In some aspects the network may comprise a local area network or a wide area network. A wireless device may support or otherwise use one or more of a variety of wireless communication technologies, protocols, or standards such as, for example, CDMA, TDMA, OFDM, OFDMA, WiMAX, and Wi-Fi. Similarly, a wireless device may support or otherwise use one or more of a variety of corresponding modulation or multiplexing schemes. A mobile wireless device may wirelessly communicate with other mobile devices, cell phones, other wired and wireless computers, Internet web-sites, etc.

The teachings herein may be incorporated into (e.g., implemented within or performed by) a variety of apparatuses (e.g., devices). For example, one or more aspects taught herein may be incorporated into a phone (e.g., a cellular phone), a personal data assistant (PDA), a tablet, a mobile computer, a laptop computer, a tablet, an entertainment device (e.g., a music or video device), a headset (e.g., headphones, an earpiece, etc.), a user I/O device, or any other suitable device.

In some aspects a wireless device may comprise an access device (e.g., a Wi-Fi access point) for a communication system. Such an access device may provide, for example, connectivity to another network (e.g., a wide area network such as the Internet or a cellular network) via a wired or wireless communication link. Accordingly, the access device may enable another device (e.g., a Wi-Fi station) to access the other network or some other functionality. In addition, it should be appreciated that one or both of the devices may be portable or, in some cases, relatively non-portable.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software as a computer program product, the functions may be stored on or transmitted over as one or more instructions or code on a non-transitory computer-readable medium. Computer-readable media can include both computer storage media and communication media including any medium that facilitates transfer of a computer program from one place to another. A storage media may be any available media that can be accessed by a computer. By way of example, and not limitation, such non-transitory computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a web site, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of non-transitory computer-readable media.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A method for establishing a personal area network connection between a mobile device and a personal area network system, comprising:
pairing (306) the mobile device (110) with the personal area network system (140);
receiving (306) a telephone call at the mobile device (110);
notifying the personal area network system (140) that the mobile device (110) has received a telephone call; and **characterised by**:
capturing audio (312) data from one or more microphones of the mobile device (110), wherein the audio data comprises an acoustic signal generated by an audio system to which the personal area network system (140) is coupled; and wherein the personal area network system causes the
acoustic signal to be generated by the audio system in response to the personal area network system receiving the notification from the mobile device (110);
determining (316) a physical distance between the mobile device(110) and the personal area network system(140) based on the captured audio data; and
forwarding telephone call data received by the mobile device (110) to the personal area network system (140) when the determined physical distance is below a threshold.

2. The method of claim 1, wherein the physical distance between the mobile device (110) and the personal area network system (140) is determined by the mobile device from the acoustic signal.

3. The method of claim 2, wherein the acoustic signal is an ultrasonic sound signal with a frequency greater than an upper limit of human hearing, and wherein the mobile device comprises three microphones that are utilized to triangulate the physical distance between the mobile device and the personal area network system from a differential time-of-flight of the acoustic signal between the three microphones.

4. The method of claim 1, further comprising:
processing the telephone call at the mobile device (110) when the determined physical distance exceeds the threshold.

5. The method of claim 4, wherein the threshold is a reference distance selected to ensure that the mobile device is within a physical structure in which the personal area network system is located.

6. The method of claim 1, further comprising:
processing the telephone call at the mobile device (110) when the acoustic signal data is not present within the captured audio data.

7. The method of claim 1, wherein a plurality of mobile devices (110) are paired with the personal area network system(140), and the telephone call data is forwarded to the personal area network system(140) when the determined distance is below a threshold and when the determined physical distance is less than physical distances between the remaining plurality of mobile devices and the personal area network system.

8. The method of claim 1, further comprising:
periodically capturing audio data from one or more microphones of the mobile device;
determining a second physical distance between the mobile device and the personal area network system based on the periodically captured audio data; and
when the second physical distance is above a threshold, handling the telephone call at the mobile device, wherein the mobile device ends forwarding of the telephone call data to the personal area network system.

9. The method of claim 1, wherein the mobile device (110) is a cellular telephone and the personal area network system is a Bluetooth communication device inside of an automobile, and wherein the Bluetooth communication device is coupled with an audio system of the automobile.

10. The method of claim 1, wherein the audio data is generated by an audio system to which the personal area network system is coupled.

11. A non-transitory computer readable storage medium including instructions that, when executed by a processor, cause the processor to perform the method according to any of claims 1 to 10.

12. A mobile device for establishing a personal area network connection between a mobile device and a personal area network system, comprising:
a memory to store a personal area network communication engine and a signal distance calculator;
a processor coupled with the memory to execute the personal area network communication engine and the signal distance calculator to implement the method according to any of claims 1 to 10.

## Patentansprüche

1. Ein Verfahren zum Einrichten einer PAN-Verbindung (PAN = personal area network bzw. persönliches Netzwerk) zwischen einer Mobileinrichtung und einem PAN-System, das Folgendes aufweist:
Paaren (306) der Mobileinrichtung (110) mit dem PAN-System (140);
Empfangen (306) eines Telefonanrufs an der Mobileinrichtung (110);
Benachrichtigen des PAN-Systems (140), dass die Mobileinrichtung (110) einen Telefonanruf empfangen hat; und das **gekennzeichnet ist durch**:
Erfassen von Audiodaten (312) von einem oder mehreren Mikrofonen der Mobileinrichtung (110), wobei die Audiodaten ein akustisches Signal aufweisen, das **durch** ein Audiosystem generiert wird, mit welchem das PAN-System (140) gekoppelt ist; und wobei das PAN-System veranlasst, dass das akustische Signal **durch** das Audiosystem generiert wird ansprechend darauf, dass das PAN-System die Benachrichtigung von der Mobileinrichtung (110) empfängt;
Bestimmen (316) einer physischen Distanz zwischen der Mobileinrichtung (110) und dem PAN-System (140) basierend auf den erfassten Audiodaten; und
Weiterleiten von Telefonanrufdaten, die **durch** die Mobileinrichtung (110) empfangen werden, an das PAN-System (140), wenn die bestimmte physische Distanz unter einem Schwellenwert ist.

2. Verfahren nach Anspruch 1, wobei die physische Distanz zwischen der Mobileinrichtung (110) und dem PAN-System (140) durch die Mobileinrichtung aus dem akustischen Signal bestimmt wird.

3. Verfahren nach Anspruch 2, wobei das akustische Signal ein Ultraschallsignal mit einer Frequenz ist, die größer ist als eine obere Grenze des menschlichen Hörvermögens, und wobei die Mobileinrichtung drei Mikrofone aufweist, die genutzt werden zum Triangulieren der physischen Distanz zwischen der Mobileinrichtung und dem PAN-System aus einer differenziellen Laufzeit des akustischen Signals zwischen den drei Mikrofonen.

4. Verfahren nach Anspruch 1, das weiter Folgendes aufweist:
Verarbeiten des Telefonanrufs an der Mobileinrichtung (110), wenn die bestimmte physische Distanz den Schwellenwert überschreitet.

5. Verfahren nach Anspruch 4, wobei der Schwellenwert eine Referenzdistanz ist, die ausgewählt ist um sicherzustellen, dass die Mobileinrichtung innerhalb einer physischen Struktur ist, in welcher das PAN-System angeordnet ist.

6. Verfahren nach Anspruch 1, das weiter Folgendes aufweist:
Verarbeiten des Telefonanrufs an der Mobileinrichtung (110), wenn die akustischen Signaldaten nicht innerhalb der erfassten Audiodaten vorliegen.

7. Verfahren nach Anspruch 1, wobei eine Vielzahl von Mobileinrichtungen (110) mit dem PAN-System (140) gekoppelt wird und die Telefonanrufdaten an das PAN-System (140) weitergeleitet werden, wenn die bestimmte Distanz unter einem Schwellenwert ist und wenn die bestimmte physische Distanz geringer ist als physische Distanzen zwischen der verbleibenden Vielzahl von Mobileinrichtungen und dem PAN-System.

8. Verfahren nach Anspruch 1, das weiter Folgendes aufweist:
periodisches Erfassen von Audiodaten von einem oder mehreren Mikrofonen der Mobileinrichtung;
Bestimmen einer zweiten physischen Distanz zwischen der Mobileinrichtung und dem PAN-System basierend auf den periodisch erfassten Audiodaten; und
wenn die zweite physische Distanz über einem Schwellenwert ist, Handhaben des Telefonanrufs an der Mobileinrichtung, wobei die Mobileinrichtung eine Weiterleitung der Telefonanrufdaten an das PAN-System beendet.

9. Verfahren nach Anspruch 1, wobei die Mobileinrichtung (110) ein Mobilfunk- bzw. zellulares Telefon ist und das PAN-System eine Bluetooth-Kommunikationseinrichtung innerhalb eines Automobils ist,
und wobei die Bluetooth-Kommunikationseinrichtung mit einem Audiosystem des Automobils gekoppelt ist.

10. Verfahren nach Anspruch 1, wobei die Audiodaten durch ein Audiosystem generiert werden, mit welchem das PAN-System gekoppelt ist.

11. Ein nicht transitorisches computerlesbares Speichermedium, das Instruktionen bzw. Befehle aufweist, die, wenn sie durch einen Prozessor ausgeführt werden, den Prozessor veranlassen zum Durchführen des Verfahrens gemäß einem der Ansprüche 1 bis 10.

12. Eine Mobileinrichtung zum Einrichten einer PAN-Verbindung (PAN = personal area network bzw. persönliches Netzwerk) zwischen einer Mobileinrichtung und einem PAN-System, die Folgendes aufweist:
einen Speicher zum Speichern einer PAN-Kommunikations-Engine und eines Signaldistanzberechnungselementes;
einen Prozessor, der mit dem Speicher gekoppelt ist zum Ausführen der PAN-Kommunikations-Engine und des Signaldistanzberechnungselementes zum Implementieren des Verfahrens gemäß einem der Ansprüche 1 bis 10.

## Revendications

1. Procédé pour établir une connexion de réseau de zone personnel entre un appareil mobile et un système de réseau de zone personnel, comprenant les étapes consistant à :
apparier (306) l'appareil mobile (110) avec le système de réseau de zone personnel (140) ;
recevoir (306) un appel téléphonique sur l'appareil mobile (110) ;
notifier le système de réseau de zone personnel (140) de la réception d'un appel téléphonique par l'appareil mobile (110) ; et **caractérisé par** les étapes consistant à :
capturer des données audio (312) à partir d'un ou de plusieurs microphones de l'appareil mobile (110), dans lequel les données audio comprennent un signal acoustique généré par un système audio auquel le système de réseau de zone personnel (140) est couplé ; et dans lequel le système de réseau de zone personnel provoque la génération du signal acoustique par le signal audio en réponse à la réception, au niveau du système de réseau de zone personnel, de la notification à partir de l'appareil mobile (110) ;
déterminer (316) une distance physique entre l'appareil mobile (110) et le système de réseau de zone personnel (140) sur la base des données audio capturées ; et
transférer les données d'appel téléphonique reçu par l'appareil mobile (110) vers le système de réseau de zone personnel (140) lorsque la distance physique déterminée est inférieure à un seuil.

2. Procédé selon la revendication 1, dans lequel la distance physique entre l'appareil mobile (110) et le système de réseau de zone personnel (140) est déterminée par l'appareil mobile (110) à partir du signal acoustique.

3. Procédé selon la revendication 2, dans lequel le signal acoustique est un signal sonore à ultrasons avec une fréquence supérieure à une limite supérieure de l'audition humaine, et dans lequel l'appareil mobile comprend trois microphones qui sont utilisés pour la triangulation de la distance physique entre l'appareil mobile et le système de réseau de zone personnel à partir d'un temps de vol différentiel du signal acoustique entre les trois microphones.

4. Procédé selon la revendication 1, comprenant en outre l'étape consistant à :
traiter l'appel téléphonique au niveau de l'appareil mobile (110) lorsque la distance physique déterminée dépasse le seuil.

5. Procédé selon la revendication 4, dans lequel le seuil est une distance de référence sélectionnée pour s'assurer que l'appareil mobile se trouve dans une structure physique dans laquelle est situé le système de réseau de zone personnel.

6. Procédé selon la revendication 1, comprenant en outre l'étape consistant à :
traiter l'appel téléphonique au niveau de l'appareil mobile (110) lorsque les données du signal acoustique ne sont pas présentes au sein des données audio capturées.

7. Procédé selon la revendication 1, dans lequel une pluralité d'appareils mobiles (110) sont appariés avec de système de réseau de zone personnel (140) et les données d'appel téléphonique sont transmises au système de réseau de zone personnel (140) lorsque la distance déterminée est inférieure à un seuil et lorsque la distance physique déterminée est inférieure aux distances entre la pluralité d'appareils mobiles restants et le système de réseau de zone personnel.

8. Procédé selon la revendication 1, comprenant en outre les étapes consistant à :
capturer périodiquement des données audio à partir d'un ou plusieurs microphones de l'appareil mobile ;
déterminer une deuxième distance physique entre l'appareil mobile et le système de réseau de zone personnel sur la base des données audio capturées périodiquement ; et
lorsque la deuxième distance physique est supérieure à un seuil, traiter l'appel téléphonique au niveau de l'appareil mobile, dans lequel l'appareil mobile termine le renvoi des données d'appel téléphonique vers le système de réseau de zone personnel.

9. Procédé selon la revendication 1, dans lequel l'appareil mobile (110) est un téléphone cellulaire et le système de réseau de zone personnel est un dispositif de communication Bluetooth à l'intérieur d'une automobile, et dans lequel le dispositif de communication Bluetooth est couplé à un système audio de l'automobile.

10. Procédé selon la revendication 1, dans lequel les données audio sont générées par un système audio auquel le système de réseau de zone personnel est couplé.

11. Un support de stockage non transitoire lisible par ordinateur comprenant des instructions qui, lorsqu'elles sont exécutées par un processeur, amènent le processeur à exécuter le procédé selon l'une quelconque des revendications 1 à 10.

12. Un appareil mobile pour établir une connexion de réseau de zone personnel entre un appareil mobile et un système de réseau de zone personnel, comprenant :
une mémoire pour stocker un moteur de communication de réseau de zone personnel ainsi que un calculateur de distance de signal ;
un processeur couplé à la mémoire pour l'exécution du moteur de communication de réseau de zone personnel ainsi que le calculateur de distance de signal pour mettre en oeuvre le procédé selon l'une quelconque des revendications 1 à 10.
